Europäisches Patentamt

European Patent Office

Office européen des brevets

(19)

(11) Publication number : **0 474 612 A2**

(12) # EUROPEAN PATENT APPLICATION

(21) Application number : **91850210.5**

(51) Int. Cl.⁵ : **G01S 13/32,** G01S 13/53

(22) Date of filing : **04.09.91**

(30) Priority : **06.09.90 SE 9002839**

(43) Date of publication of application :
**11.03.92 Bulletin 92/11**

(84) Designated Contracting States :
**AT BE CH DE DK ES FR GB GR IT LI LU NL SE**

(71) Applicant : **Bofors Electronics AB**
**S-175 88 Järfälla (SE)**

(72) Inventor : **Olsson, Kjell**
**Saningsvägen 17**
**S-175 45 Järfälla (SE)**

(74) Representative : **Olsson, Gunnar**
**Nobel Corporate Services Patents and**
**Trademarks**
**S-691 84 Karlskoga (SE)**

(54) **Radar means.**

(57)    The disclosure relates to a radar apparatus of the type which comprises a transmitter which substantially continuously transmits a modulated carrier wave signal, and a receiver for receiving the carrier wave signal (the echo signal) reflected against an object, and in which the carrier wave signal is modulated with an encoding signal in which one bit in the code is of a duration which is several times longer than the period time of the carrier wave signal, and in which the code of several bits forms a block which is characterized by modulation of a carrier wave at constant frequency. Furthermore, the frequency of the carrier wave is changed between the blocks, so that the transmitter transmits one block with a carrier wave frequency which is different from the carrier wave frequency or frequencies which the receiver is set to receive. The apparatus includes means for dividing code blocks of the same frequency into a number of subunits, for example eight in number, in which each subunit is first correlated individually, and thereafter doppler analysis is carried out on the subunits of the block.

EP 0 474 612 A2

Fig.3

## TECHNICAL FIELD

The present invention relates to a radar apparatus of the type which comprises a transmitter which substantially continuously emits a modulated carrier wave signal, and a receiver for receiving the carrier wave signal (the echo signal) reflected towards an object, and in which the carrier wave signal is modulated by an encoding signal in which one bit in the code has a duration which is several times longer than the period time of the carrier wave signal, and in which the code of a plurality of bits forms a block which is characterized by modulation of the carrier wave with constant frequency. Furthermore, the frequency of the carrier wave is changed between the blocks so that the transmitter transmits a block at a carrier wave frequency which is different from the carrier wave frequency or frequencies for which the receiver is set to receive.

A radar apparatus of this type is described in Swedish application number 89.02983-9 and is particularly intended for military applications in which the radar may be exposed to counter agents.

In this type of radar, the encoding signal constitutes a key part. Since this signal is of such a nature that a bit in the code has a duration which is several times longer than the period number of the carrier wave signal, and the code of a plurality of bits forms a block, and the frequency of the carrier wave is changed between the blocks, the block length may be rendered considerably shorter than the corresponding range of the radar, which implies that the radar transmitter often changes frequency during the time it takes to receive an echo response from the range limit, which increases the defence capability of the radar against detection and jamming.

Air defence systems employ tracking radar for homing a sight onto a target. A tracking radar must then be able to detect small aircraft and missiles at low altitude above land or sea. On land, radar reflection against individual objects may be extremely great, for example, mountains, building, masts etc. give much more powerful radar echoes than small aircraft and missiles. However, aircraft and missiles move at high velocity which imparts to the radar echo a doppler effect on the radar frequency. This doppler effect may be employed for distinguishing moving targets at different speeds, and above all to distinguish moving targets from fixed targets, so that small aircraft may be detected even in the vicinity of large ground reflections.

In the radar apparatus according to patent application No. 89.02983-9, the receiver can simultaneously receive the signal from blocks of at least two discrete frequencies, implying that the receiver can dedicate certain analysis functions to a given range sector and partly other analysis functions to another range sector by selecting corresponding blocks which have been reflected from each respective range sector and coupling these to each respective analysis function in the receiver. The description in the above-mentioned application discloses by way of example that a range sector may be analysed in respect of the doppler effect of a moving target, and another range sector may be analysed in respect of good range resolution towards targets.

One problem in this context is that, on employment of long coded blocks at the same frequency in such a radar, the doppler shift may give a phase change during the length of the block which is greater than 180°. Since encoding of the carrier frequency signal is effected by means of, for example, biphase coding, it will be readily understood that this impedes detection.

## OBJECTS OF THE INVENTION

One object of the present invention is therefore to be able in a radar apparatus of the above-outlined type to utilize the doppler shift in order to distinguish moving targets at different velocities from one another, and primarily to distinguish moving targets from fixed targets, in which the encoding may take place without incurring the above-mentioned problems.

That which may substantially be considered as novel and characterizing of the present invention is apparent from the characterizing clause of the appended Claim 1.

By dividing up code blocks of the same frequency into several subunits in which each subunit is first separately correlated, and thereafter carrying out doppler analysis on the subunits of the block in the manner disclosed in the characterizing clause of Claim 1, the doppler shift over a block may be seen as a possibility rather than a problem, i.e. if there is a powerful doppler shift during the length of the block, this doppler shift can be employed for distinguishing moving targets at different velocities from one another and, above all, for distinguishing moving targets from fixed targets.

In a traditional pulse doppler radar, the doppler information is obtained by comparing the phase between successive pulse responses. Doppler information is not obtained during the pulse. In the radar under consideration here, the doppler information may correspondingly be obtained by a comparison of echo responses from blocks which are repeated on the same frequency. Taken as a whole, doppler information can then be obtained both within a block and between blocks. In this context, the doppler determination may be improved in that the ambiguity of the doppler is reduced. In a traditional pulse doppler radar, the pulse repetition frequency determines the level of ambiguity in the doppler.

In the radar contemplated here, the doppler information during the blocks contributes to a reduction of ambiguity. There are several methods for obtaining the doppler information. For example, an FFT analysis (Fast Fourier Transform) may be carried out on the different part blocks included in the same block, and thereafter an FFT,and analysis be carried out on the results from different blocks. An alternative option is to begin with an FFT analysis of part block 1 from different blocks, part block 2 from different blocks, and so on, in order finally to effect an FFT analysis on these results from each respective part block over a total block length. A few different methods of obtaining the doppler information will be described in greater detail hereinbelow with particular reference to the accompanying drawings, in which:

Fig. 1 schematically shows how the doppler information can be obtained by FFT analysis of different part blocks included in the same block;

Fig. 2 schematically shows an alternative method of obtaining the doppler information;

Fig. 3 schematically shows an alternative analysis procedure which is based on the concept that a received "sample" is, after A/D conversion, distributed to all relevant range sectors in parallel in accordance with the code pattern; and

Fig. 4 is a correction unit for proximal targets.

When the radar apparatus is described in greater detail hereinbelow, only those parts of the radar which are germane to the present invention, i.e. how the doppler information is processed in the receiver, will be considered more closely. Otherwise, the radar apparatus may be of the type which is described in the above-mentioned Swedish patent application No. 89.02983-9.

Thus, the transmitter comprises a carrier wave generator which continuously emits a carrier wave signal, a modulator for modulating with an encoding signal whose basic frequency, the code frequency, is determinative of the range resolution of the radar, and a transmitter antenna.

The encoding signal is of such a nature that one bit in the code is of a duration which is several times longer than the period number of the carrier wave signal, and in which the code of several bits forms a block, a block being characterized by modulation of a carrier wave at constant frequency. The frequency of the carrier wave is changed between the blocks so that the transmitter transmits one block at a carrier wave frequency which is different from the carrier wave frequency or frequencies at which the receiver is set to receive. The block length may be made considerably shorter than the corresponding range of the radar, implying that the radar transmitter often changes frequency during the time it takes to obtain an echo response from the range limit, which impedes detection and jamming of the radar.

The receiver includes an antenna and different signal processing devices of per se known type. On signal processing, the received signal is correlated with the transmitted code. The correlator may have different lengths in order to accommodate relevant code lengths. The correlation results are subsequently processed in an analyser.

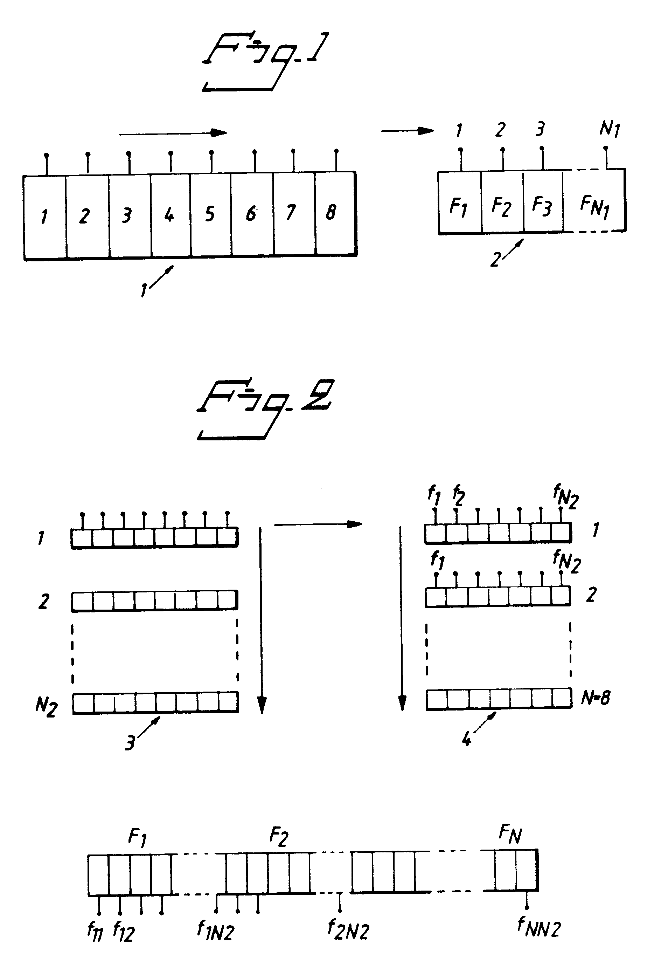

According to the present invention, a block is divided up into several subunits (part blocks) which are processed in respect of the doppler shift which changes the phase between the different subunits in the block. Fig. 1 schematically shows a correlator 1 which corresponds to a transmitted block and is divided into eight part blocks. Each part block is first correlated separately, and thereafter a doppler analysis is carried out on the part blocks of the block. The results of this analysis give $N_1$ different doppler sectors. There then follows a doppler analysis of the successive blocks on the same frequency, each doppler sector being divided up into a plurality of doppler segments.

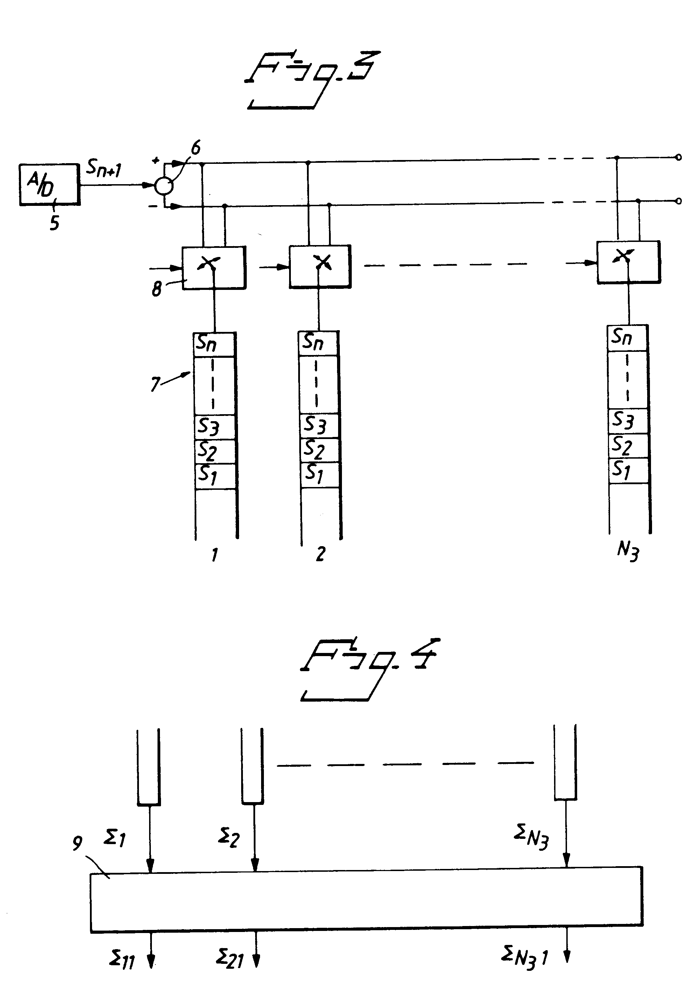

Fig. 2 shows an alternative method of obtaining the doppler information. Also in this case, code blocks are divided up on the same frequency into a number (8) of subunits, in which each subunit is first correlated independently, but thereafter doppler analysis is carried out on the respective subunits of successive blocks, such that subunit 1 in a block is analysed together with subunit 1 of other blocks, and the same process for subunit 2 of the blocks, and so on, and only then are the results of this analysis employed for a doppler analysis over entire block lengths. The figure shows the repetition of $N_2$ blocks 3 of the same frequency, and corresponding filters 4 for each subunit (8 in number), each one with $N_2$ doppler segments. Thereafter, an analysis is carried out over the eight subunits in the block, each doppler sector $F_1 ... F_N$ being allocated $N_2$ doppler segments, i.e. .... $f_{11'}$, $f_{12'}$,... $f_{1N2'}$, $f_{21'}$, $f_{22} ... F_{2N2}$; and so on.

Yet a further method of realizing a simple dopplle function for binary coded blocks is illustrated in the following example.

The radar emits, for instance, four blocks each of 51.2 μsec on each frequency. Thereafter, it emits four new blocks of the same carrier frequencies, and so on during,antenna scanning of the target. The code frequency is, for example, 10 MHZ, which gives a range resolution corresponding to a pulse length of 0.1 μsec. In order to handle a block, a correlator will then be required of 512 elements (= block length). The correlator is divided into eight part blocks, in which each part block may be sum-totalled individually. Eight doppler sectors can then be created.

Doppler sector 1

Here, all part blocks are added to a sum total. This implies that for high target velocities, the doppler shift over a block will be so great that the target is suppressed. For example, a target giving a phase shift of two over the rode block (51.2 μs) will give the total = 0. The phase shift $\frac{\pi}{2}$ gives a suppression of 1 dB, and $\pi$ gives 4 dB target suppression.

Doppler sector 2

Here, the symbols for the four last part blocks are changed before the entire block is added. This implies that all fixed and slow targets in each respective main lobes will be subtracted off. Targets at speeds which give a phase shift of $\frac{\pi}{2}$ over the block are "suppressed" in this doppler sector by nine dB. The phase shift $\pi$ radians give 4 dB target suppression. The phase shift $2\pi$ radians also gives 4 dB, for which reason doppler sector 2 covers the sector $\pi$ to $2\pi$.

Doppler sectors 3 and 4

Here, the block is divided into four parts and the signs of part block 2 and 4; and 2 and 3 are changed before the entire block is added. In this instance, a doppler coverage of $2\pi$ - $4\pi$ is obtained.

Doppler sectors 5, 6, 7 and 8

Here, signs are successively replaced between the part blocks so that a doppler coverage is obtained corresponding to $4\pi$ to $8\pi$ radians.

The relevant 8 doppler sectors in accordance with the above can cover all doppler velocities from 0 m/s to 1,100 m/s in an X band radar, without blind speeds or ambiguity in range.

The above result applies to a cold block of 51.2 μs. This code block may, for example, be followed by three other code blocks on different frequencies. Thereafter, it is possible once again to transmit a code block on the same frequency if coherent integration is desired. In order to increase jamming resistance, another code may alternatively be employed. Integration over one antenna scan can then give the doppler sectors 2 to 8 inclusive very good suppression of fixed targets in the main lobe. Time side lobes may also be doppler suppressed if the same code is retained over several code blocks on the same frequency.

In doppler sector I where the slow targets are to be found, an FFT can give suppression in a manner corresponding to a normal pulse doppler radar with corresponding prf. In AA applications, interest in slow targets in doppler sector I may be slight, and doppler sector I may possibly need not be analysed at all.

**Correlator function**

As described in patent application No. 89.02983-9, targets which are located at a certain range, in a certain range segment, may give rise to a signal effect not only in this range segment but also to a lesser degree in other range segments. These potential errors are obtained in the correlator where the transmitted code is compared with the received code. The size of the potential errors or so-called time side lobes, depends on the appearance and length of the code. On selection of suitable code, the potential errors will be very slight, for example from 100 to 10,000 times smaller than the original target. This implies that only extremely large targets will give rise to time side lobes of detectable magnitude. Since the code is known, the time side lobes which a target in a certain range segment will give rise to are also known beforehand. It is then possible to subtract the potential error of a detected target in other range segments. In general, it is sufficient to carry out this correction for a few large targets over a certain level.

Right from the outset, the correlator may be constructed as a two- or multi-step operation, in which the result from the first correlation is fed to a corrector unit which, in one or more steps, corrects the obtained signal in the different range segments in respect of the known potential error of the given code in different range segments.

This correlator may, for instance, be carried out according to the principle that the received "samples" of a code block are successively fed into a correlator which compares with the transmitted code and, when agreement has been obtained for the returning radar signal of a given target, a high signal output is obtained which indicates the target and its range segment. In the next step, correlation is obtained for any possible targets in the next range segment, and so on.

Fig. 3 illustrates an alternative analysis procedure which is based on the concept that a received "sample" is, after the A/D converter (see Fig. 4 in Swedish patent application No. 89.02983-9), distributed to all relevant range segments in parallel, in accordance with the code pattern.

If, for example, binary coding is employed, the detected "sample" will also be given a value with reversed signs, and all range segments which, in this moment of time, are to have a minus sign according to the code, are given the "sample" with reversed sign, while the other range segments are fed with the "sample" without change of sign. In the next time step, a new sample is obtained from the A/D converter and this is fed with and without sign change to each respective range gate in accordance with the pattern of the code for each respective range.

By such means, each range gate will be fed with incoming "samples" with corrected signs in accordance with the given code. Integration of "samples" in each respective range gate will then give successive growth of signal if there is a detectable target in the range gate, otherwise the integration gives a dimension of the quantity of uncorrelated monkey chatter or jamming. If the target in the relevant range gate is movable, with large doppler shift, the "integration" may take place in the form of an FFT analysis or some other of the above-outlined methods for doppler analysis.

Sample $S_{n+1}$ from the A/D converter 5 is allocated the sign + or - in a sign former 6. Each range gate 7 is thereafter fed via switches 8 controlled by the code with the sample value with that sign which, according to the code, applies to each rerpective range gate. In range gate 1, all samples $S_1$ to $S_n$, inclusive have, in this instance, been given signs so that a target in range gate 1 is added with each sample to a high end total. The corresponding applies for range gate 2, and so on. A target which is to be found at a range correrponding to range gate 2 will thereby not be added up in range gate 1, since the input of samples to range gate 1 does not take place with the signs which correspond to targets for the correct range gate, in this case gate 2.

The analysis procedure described in the foregoing of successively and in parallel building up information on targets in different range gates may be advantageous when the intention is to correct for the time side lobes of targets in other range gates.

In an AA application, it may be interesting to track targets until they approach very close to the radar; in order to be able to provide information on the position of the target to anti-aircraft batteries for combatting the target also in this situation.

Targets which are located close to the radar give powerful echos back to the receiver of the radar as compared with targets which are more distally located. The power of the radar echo fades with the fourth potency of the range from the radar. This effect is partly compensated for in the radar under consideration here, in that proximal targets do not reflect power back during as long time as distal targets. When a code block is transmitted from the radar, the receiver of the radar receives radar echo from previously transmitted blocks, and the receiver does not open for the relevant block until this has moved a suitable distance from the radar. This implies that the immediately proximal region adjacent the radar will already have been passed by the code block when the receiver opens to receive radar echo from this block. This also implies that targets outside this area will have been passed by the greater part of the code block, and that it is only a minor fraction of the reflected code block which reaches an open radar receiver. Proximal targets will, hence, give radar echo of high amplitude but brief duration, which has an equalizing effect.

The proximal targets are seen for but a short time by the receiver of the radar and cannot, therefore, utilize a long code. This implies that such targets may give rise to relatively large time side lobes and that there may be a specific need to apply correction for these. In such instance, it may be of interest to create range gates for the immediate vicinity of the radar, and employ the above-described method with parallel feeding of these range gates with received "samples". There will then be obtained early information on large proximal targets, and it is possible to carry out side lobe correction in the more distal range gates, or quite simply refrain from employing the "samples" which are dominated by the large proximal targets for detecting targets in distal range gates.

One example of such correction is shown in Fig. 4. A corrector unit 9 is suitably fitted with a threshold which senses the level of the total values $\Sigma 1$, $\Sigma 2 ... \Sigma N_3$ from the range gates 1-$N_3$, and if one of the sum totals from each respective range gate is greater than a given value, this implies that the target at this range is so large that it may give contributory error in other range gates. The size of the contributory error in the different gates is determined by the code, for which reason this value may be subtracted from the value obtained in each respective range gate. The corrected value $\Sigma 11$ is, thus, the result of possible correction of the value $\Sigma_1$, and so on.

**Claims**

1. A radar apparatus of the type which comprises a transmitter which substantially continuously transmits a modulated carrier wave signal, and a receiver for receiving the carrier wave signal (the echo signal) reflected against an object, and in which the carrier wave signal is modulated with an encoding signal in which one bit in the code is of a duration which is several times longer than the period time of the carrier wave signal, and in which the code of several bits forms a block which is characterized by modulation of a carrier wave of constant frequency, and the frequency of the carrier wave being changed between the blocks so that the transmitter transmits a block with a carrier wave frequency which is different from the carrier wave frequency or frequencies which the receiver is set to receive, **characterized by** means for dividing code blocks of the same frequency into a number of subunits in which each subunit is first correlated individually, and a doppler analysis is thereafter carried out on the subunits of the block.

2. The radar apparatus as claimed in Claim 1, **characterized in that** the results of the doppler analysis on the subunits of the block are employed for a doppler analysis of the successive blocks on the same frequency.

3. The radar apparatus as claimed in Claim 1, **characterized in that** doppler analysis on each respective subunit of successive blocks is effected such that subunit 1 in one block is analysed together with subunit 1 of other blocks, and the same process for subunit 2 of the blocks, and so on, whereafter the results of this analysis are employed for a doppler analysis over the entire block length.

4. The radar apparatus as claimed in Claim 1, **characterized in that** binary coded code blocks on the same carrier frequency are divided up into several subunits, in which each subunit is first correlated individually, and each subunit is thereafter allocated plus or minus signs before the subunits are added, for example a doppler sector is obtained in that the first half of the subunits is allocated plus signs, while the latter half is allocated minus signs, whereat, on sum totalling, moving targets are highlighted which have a doppler shift of approx. $\pi$ to $2\pi$ radians over the block, while fixed targets are suppressed in that the + and - contributions cancel each other out.

5. The radar apparatus as claimed in Claim 4, **characterized in that** the allocation of + and - signs is alternated to the subunits with steadily higher frequency, until the highest doppler sector is obtained, when sign exchange takes place for each subunit, targets with larger doppler shift being highlighted.

6. The radar apparatus as claimed in Claim 1, **characterized in that** a received binary coded signal is, after A/D conversion, supplemented with an additional value which is the measurement value with reversed sign, in each time step the measurement value and measurement value with reversed sign, respectively, being fed to different range gates, where the range gates receive a sequence of measurement values, and in which the given, transmitted code unambiguously determines, for each time stage, to which range gate the measurement value and measurement value with reversed sign, respectively, are to be fed, integration of entered values in a range gate providing information on possible targets in this range gate.

7. The radar apparatus as claimed in Claim 6, **characterized in that** the receiver only receives a part of a reflected code block from targets which are located proximal to the radar, so that the range gates take care of targets at corresponding ranges, targets in the immediate vicinity receiving fewer measurement values in their range gates than targets which are located more distally and can utilize the entire code block.

8. The radar apparatus as claimed in Claim 7, **characterized in that** a comparison is made of the results from range gates in the vicinity of the radar with given levels, and when these levels are exceeded, corresponding measurement values from the A/D converter which contain these target signals are operative not to contribute to the results of target analysis at other target ranges.

# Fig. 1

| 1 | 2 | 3 | 4 | 5 | 6 | 7 | 8 |
|---|---|---|---|---|---|---|---|

1

| $F_1$ | $F_2$ | $F_3$ | $F_{N_1}$ |
|---|---|---|---|

1  2  3  $N_1$

2

# Fig. 2

1

2

$N_2$

3

$f_1$  $f_2$  $f_{N_2}$

1

$f_1$  $f_{N_2}$

2

N=8

4

$F_1$      $F_2$      $F_N$

$f_{11}$  $f_{12}$  $f_{1N2}$  $f_{2N2}$  $f_{NN2}$

## Fig.3

## Fig.4